# EUROPEAN PATENT SPECIFICATION

(11) **EP 3 043 235 B1**
(45) Date of publication and mention of the grant of the patent: **20.06.2018**
(21) Application number: 15200870.2
(22) Date of filing: 17.12.2015
(51) Int. Cl.: G06F 1/16

(54) **RECONFIGURABLE SLED FOR A MOBILE DEVICE**
REKONFIGURIERBARER SCHLITTEN FÜR EINE MOBILE VORRICHTUNG
TRAÎNEAU RECONFIGURABLE POUR DISPOSITIF MOBILE

(30) Priority: 31.12.2014 CN 201420862309 U; 14.12.2015 US 201514967536
(43) Date of publication of application: 13.07.2016
(60) Divisional application: 18164033.5
(73) Proprietor: Hand Held Products, Inc., Fort Mill, SC 29707 (US)
(72) Inventor: LU, Jun, Morris Plains, NJ 07950 (US); REN, Jie, Morris Plains, NJ 07950 (US); ZHANG, Jian, Morris Plains, NJ 07950 (US); WANG, Zhuling, Morris Plains, NJ 07950 (US); SMITH, Taylor, Morris Plains, NJ 07950 (US)
(74) Representative: Houghton, Mark Phillip

(56) References cited:
- WO-A1-2011/121100
- WO-A1-2014/100479
- US-A1- 2011 081 946
- US-A1- 2014 080 540

## Description

### FIELD OF THE INVENTION

The present invention relates to the field of electronic device accessories and, more specifically, to a reconfigurable sled to expand the capabilities of a mobile device.

### BACKGROUND

Mobile devices (e.g., smart phones, tablets, personal digital assistant (PDA), etc.) that include built-in cameras are widely available to consumers. Typically, these cameras are placed on the side of the electronic device opposite the primary user-interface (e.g., a touch-screen and/or keypad). In other words, the cameras are typically placed on the backside of the mobile device.

For certain functions (e.g., indicia reading), pointing the end (i.e., edge) of the mobile device at the intended target is more familiar to a user. When pointing the mobile device in this manner, however, the camera is facing downward rather than at the target.

An optical redirection adapter for redirecting the imaging of a mobile device has been disclosed (e.g., US 20140232930 A1). This adapter is fixed and cannot be reconfigured. In other words, to use the mobile device's camera normally, a user must remove the adapter. In addition, this adapter does not communicate with the mobile device.

Scanning sleds (i.e., sleds) are commercially available (e.g., HONEYWELL CAPTUVO^{tm}) to adapt a mobile device for indicia reading. The sled typically surrounds the mobile device like a case and leaves the graphical user interface (GUI) and camera exposed. The sled is an active device and may include a power source, a scanning subsystem (e.g., laser scanner or imaging scanner) a processor (e.g., a microcontroller (MCU)), an illumination subsystem, and/or an aiming subsystem. These devices are communicatively coupled with the mobile device (e.g., electrical connection, BLUETOOTH, etc.) and may be controlled by applications running on the mobile device. As a result, these devices may be expensive and bulky.

Therefore, a need exists for a reconfigurable sled that (i) has the performance of a traditional scanning sled but without the added cost and bulkiness and (ii) performs like a fixed adapter but without limiting a user's use of the mobile device's camera.

### SUMMARY

The present invention is defined by the appended claims.

Accordingly, in one aspect, the present invention embraces a reconfigurable sled for a mobile device with a camera. The sled includes a frame for holding the mobile device. The frame is configured with guides running along two sides. The sled also includes a cover having a plurality of hinged panels engaged with the guides so that the panels may be slid along the guides and folded into different configurations. At least one of the hinged panels is attached to the frame at one end so that as the panels are slid along the guides, they may be folded into different configurations. In a first configuration, the hinged panels lie flat over the mobile-device's back surface and permit the camera an
unobstructed view. In a second configuration, two of the hinged panels are folded to form a peak over the mobile-device's back surface and redirect the camera's field-of-view using a reflective element affixed to one of the folded hinged panels.

In an exemplary embodiment, the reconfigurable sled's hinged panels include three hinged panels. A window panel with an aperture for the camera to image through is hingedly attached to the frame along the window-panel's top edge. A mirror panel with a reflective element for folding the camera's imaging direction is hingedly attached to the window panel's bottom edge. A slider panel for repositioning the window panel and the mirror panel is hingedly attached to the mirror panel's bottom edge and engaged on the slider panel's sides by the frame's guides so that the slider panel is free to slide within the guides and so that the slider panel holds the mobile device in the frame.

In another aspect, the present invention embraces a method to enable a mobile device mounted in a reconfigurable sled for indicia reading. The method includes the step of acquiring images using the mobile device's imaging subsystem. The imaging subsystem includes a camera and an illuminator. The method also includes the step of sliding a mirror mounted on the reconfigurable sled into the camera's field-of-view.
In this position, the mirror changes the imaging direction of the camera. The mirror has visible markings, and the method includes the step of enabling the mobile device for indicia reading when these visible markings are detected and properly located in the acquired images.

In an exemplary embodiment, enabling the mobile device for indicia reading includes activating the camera's illuminator.

In another exemplary embodiment, enabling the mobile device for indicia reading includes rotating the acquired images.

In another exemplary embodiment, enabling the mobile device for indicia reading includes adjusting an autofocus algorithm controlling an autofocus lens that is part of the mobile device's camera.

In another exemplary embodiment, enabling the mobile device for indicia reading includes starting or stopping an application running on the mobile device.

In another aspect, the present invention embraces an indicia-reading system. The system includes a mobile device that has a camera, an illuminator, and a processor. The processor is configured for running applications. The system also includes a reconfigurable sled. The reconfigurable sled is configured for holding the mobile device and is enabled to change the mobile device's imaging characteristics. In this regard, the reconfigurable sled has a mirror to redirect the camera's imaging direction when the mirror is moved into the camera's field-of-view. The mirror has visible markings that appear in images taken of the field-of-view when the field-of-view is reflected from the mirror. An indicia reading application running on the mobile device configures the mobile device to (i) acquire images, (ii) analyze the acquired images for the visible markings, and (iii) adjust the mobile device for indicia reading if the visible markings are detected.

In an exemplary embodiment, a lens is integrated with the reconfigurable sled for adjusting the focus of the camera when the mirror is moved into the camera's field-of-view.

In another exemplary embodiment, the reconfigurable sled includes a motion control subsystem for moving the mirror; the motion control subsystem is electrically coupled to the mobile device and controllable by the indicia reading application.

In another exemplary embodiment, the indicia reading system includes an aimer subsystem for projecting an aiming pattern into the camera's field-of-view to help a user align an indicium for reading. In one possible embodiment, the light for the aimer subsystem is provided by the mobile device's illuminator. In another possible embodiment, an aimer light source (e.g., light emitting diode) is included in the indicia reading system that is separate from the mobile device.

The foregoing illustrative summary, as well as other exemplary objectives and/or advantages of the invention, and the manner in which the same are accomplished, are further explained within the following detailed description and its accompanying drawings.

### BRIEF DESCRIPTION OF THE DRAWINGS

Figure 1 graphically depicts three views of an exemplary mobile device.
Figure 2 graphically depicts a front and back perspective view of an exemplary embodiment of the reconfigurable sled for a mobile device.
Figure 3 graphically depicts a side view of an exemplary mobile device and the directions corresponding to an exemplary first configuration and an exemplary second configuration.
Figure 4 graphically depicts a sectional side view of an exemplary embodiment of the reconfigurable sled in a first configuration and a second configuration.
Figure 5 graphically depicts a sectional side view of an exemplary embodiment the reconfigurable sled in a first configuration and a second configuration.
Figure 6 graphically depicts a sectional side view of an exemplary embodiment of a locking feature used to lock moving elements in the reconfigurable sled.
Figure 7 graphically depicts an exemplary image taken by a mobile device in a reconfigurable sled showing the visible markings of the mirror.
Figure 8 graphically depicts a flow chart of an exemplary method to enable a mobile device mounted in the reconfigurable sled for indicia reading.

### DETAILED DESCRIPTION

A scanning sled is like a case for a mobile device but has capabilities to enhance the mobile device's functionality. Barcode scanning, for example, may be enabled by the scanning sled. In this regard, dedicated batteries, electronics, and optics, may be integrated into this scanning sled. The scanning sled may be electrically connected and/or communicatively coupled wirelessly with the mobile device, and the mobile device may run software (i.e., applications) that configures the scanning sled and/or mobile device. The scanning sled is also ergonomically designed to help a user handle the device in a convenient and intuitive way. For example, indicia readers are typically designed to function in a "point-and-shoot" fashion. As a result, the scanning sled is typically configured to scan barcodes in a direction along the long edge of the mobile device.

Scanning sleds may be complicated electronic devices and may be expensive to design and manufacture. Since these devices may be customized to accommodate a particular mobile device, this could mean obsolesce within a few years in today's rapidly changing mobile device market. Rather than designing expensive scanning sleds for a changing market, a more cost efficient strategy would be to design a simpler sled and utilize more of the features of the mobile device. Today's mobile devices have sophisticated electronics and have reached a point where many scanning sled functions may be easily performed by the mobile device. Therefore, the present invention addresses the need for a sled that has the performance and ergonomics of an active scanning sled but without the added cost and bulkiness.

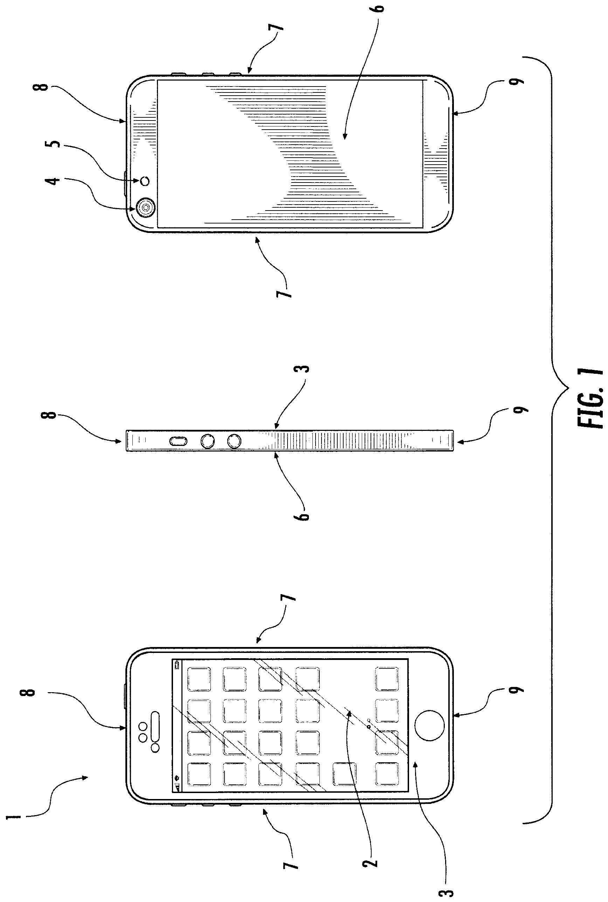

An exemplary mobile device is shown in Figure 1. The mobile device **1** is configured with a graphical user interface (GUI) **2** on its front surface **3.** A camera **4** and its flash (i.e., illuminator) **5** is typically located on the back surface **6.** The sides **7** of the mobile device are typically made longer to make holding convenient. In a normal imaging operation, the mobile device is held with the front surface **3** and GUI **2** facing the user, and the back surface **6** is held facing the target. The user may hold the mobile device either vertically or horizontally to take a picture. A stream of images is typically portrayed on the GUI and a user captures an image by pressing a soft button presented on the GUI. The imaging direction is perpendicular to the back surface **6.** This normal imaging configuration is suitable for occasional images but is not convenient for repetitive barcode scanning.

As mentioned previously when describing the sled, a point-and-shoot configuration is more desirable for indicia reading. To achieve this indicia reading imaging configuration, the mobile device's **1** imaging must be redirected. The direction for indicia reading is typically along the long dimension of the mobile device and away from the top surface **8.** With the imaging aligned in this direction, a user may hold the mobile device **1** like a television remote control. To scan a barcode, a user could (i) hold the mobile device so that the GUI **2** faces the user, (ii) point the top surface **8** of the mobile device at the barcode (i.e., bottom surface **9** away from the barcode), and (iii) interact with indicia reading software running on the mobile device **1** via the GUI **2** to initiate a scan.

A fixed optical redirection adapter may be used for this redirecting the imaging, and such an apparatus has been disclosed (e.g., US20140232930A1). This approach, however, does not provide the functionality of the scanning sled and does not permit the mobile device to image normally unless the apparatus is removed. The redirection adapter does not interact with the mobile device. For example, there is no feedback to alert a user that it has been installed incorrectly. In addition, the mobile device must be configured manually to read indicia (e.g., turn on the illuminator or aimer). Therefore, the present invention also addresses the need for a sled that (i) has the simplicity of a fixed optical redirection adapter, (ii) does not limit the use of the mobile device's camera, and (iii) can interact with an indicia-reading application on the mobile device.

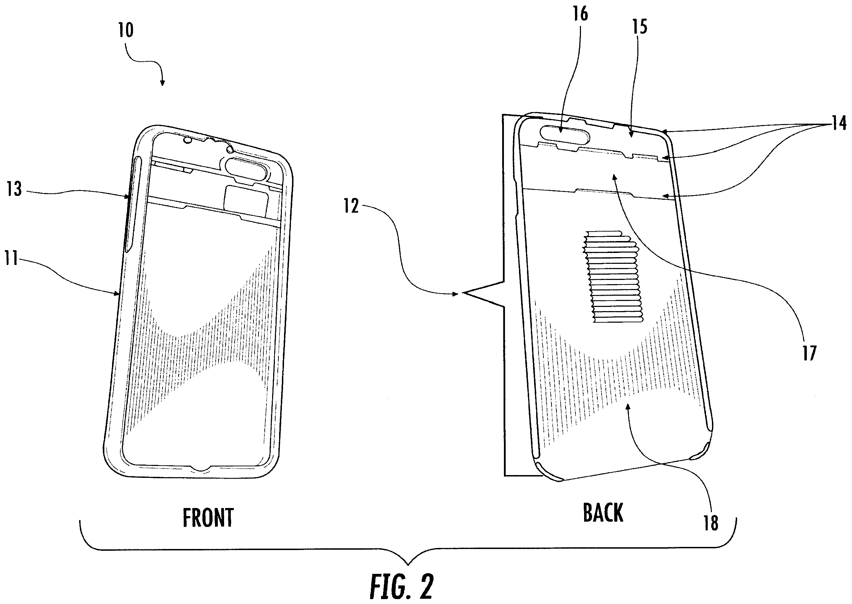

The present invention embraces a reconfigurable case/adapter (i.e., sled) to enable a mobile device (e.g., smartphone, tablet, PDA, etc.) to scan barcodes (i.e., read indicia). An exemplary embodiment of a reconfigurable sled **10** for a mobile device is shown in Figure 2. There are two main components in the sled: a frame **11** and a cover **12.** The frame **11** encloses the sides **7** of the mobile device but may have apertures **13** to allow a user to interact with the mobile device's controls. The frame covers just the edges of the mobile device's front surface **3** to allow for interaction with the GUI **2.** There are guides (e.g., slots) on either side of the frame **11** that serve as tracks to hold the cover **12** to the frame **11** while allowing the cover **12** to slide along the guide.

In the exemplary embodiment of the reconfigurable sled shown in Figure 2, a mobile device **1** may be installed into the sled by first placing the mobile device into the frame. Next, the cover **12** may be engaged with the frame guides (e.g., held by the guides while permitting movement) and slid over the back surface **6** to hold the mobile device in the frame.

The cover **12** may be composed of a plurality of panels connected by hinges (i.e., hingedly connected panels **14).** In the embodiment shown in Figure 2, the top most hinged panel of the cover is the window panel **15.** The window panel **15** is hingedly attached to the frame on the top edge. The window panel **15** is configured with a window **16** through which the camera and illuminator may transmit/receive light. In some embodiments, the window aperture may be covered by a window. This window could be transparent (i.e., glass, fused silica, etc.) or could filter (i.e., color) the light of the illuminator. The filtering could cover all or a portion of the window aperture. In some embodiments, the window could have a pattern applied (e.g., painted, etched, deposited, etc.) to a surface (e.g., as part of an aimer subsystem).

The mirror panel **17** is hingedly connected to the bottom edge of the window panel **15.** The mirror panel **17** has a reflective element (e.g., mirror, prism, etc.) that is attached to the mirror panel surface facing the back surface **6** of the mobile device. When the mirror panel **17** is raised to form an angle (e.g., 45 degrees) with the back surface **6** of the mobile device it folds (i.e., redirects) the imaging direction of the camera **5** (e.g., 90 degrees). In other words, the camera's field-of-view may be repositioned by the mirror.

A slider panel **18** is hingedly connected to the lower edge of the mirror panel. The sides of the slider panel are engaged (i.e., fit into) the guides that are formed into the sides of the frame. The slider panel may be slid along the frame in order to change the positions of the window panel **15** and the mirror panel **17.** A user may slide the panel along manually, or the panel movement may be aided by a spring or a motor. If aided by a spring or motor, then the movement may be triggered by a switch (e.g., button) integrated in the case or by a signal from the mobile device as part of an application (e.g., soft button).

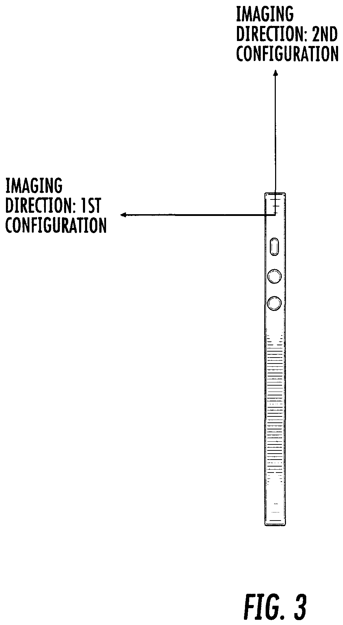

The cover of the sled is typically configured into one of two possible configurations. The imaging directions for the two configurations relative to the mobile device are shown in Figure 3. As shown in Figure 3, a first configuration allows the mobile device to image normally. The imaging direction is normal to the back surface **6** of the mobile device. A second configuration realigns the imaging direction so that it normal to the top surface **8** of the mobile device **1.**

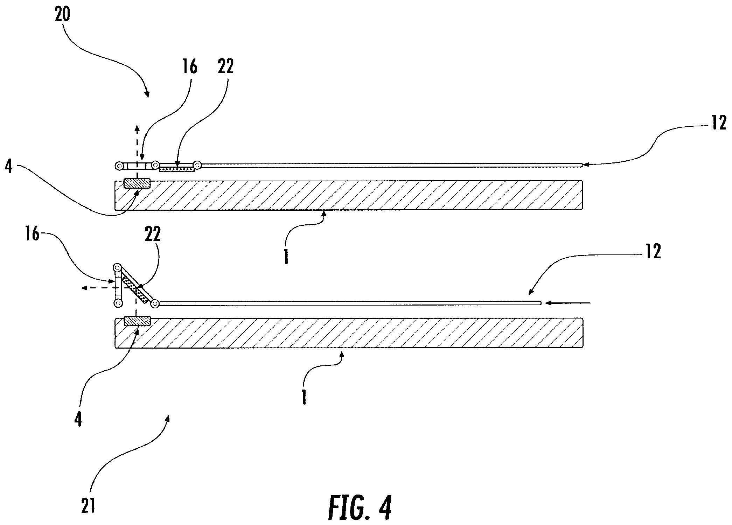

A possible embodiment of the reconfigurable sled is shown in Figure 4. In the first configuration **20.** The panels of the cover **12** lie flat over the back of the mobile device **1.** The window **16** is positioned over the camera so that the mobile device **1** may image normally. The slider panel may be slid towards the top of the mobile device into order to form the second configuration **21.** In the second configuration, a mirror **22** attached to one of the hinged panels is moved into the camera's field-of-view. The mirror **22** folds the camera's optical path but still uses the window **16,** which also is folded at an angle with respect to the mobile device (e.g., 90 degrees).

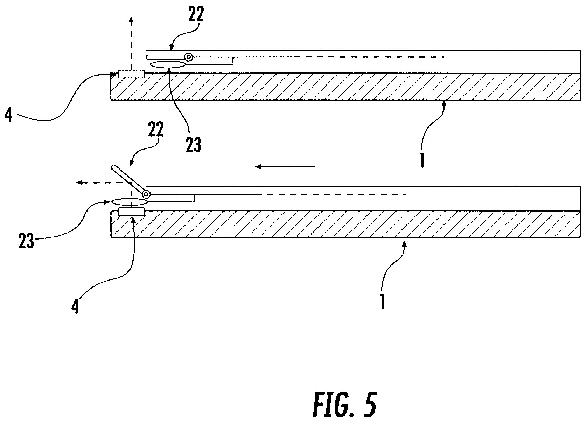

Another possible embodiment of the reconfigurable sled is shown in Figure 5. Here the mirror **22** is mounted via spring-loaded hinge to a sliding panel. A lens **23** is integrated with the mirror and is used for adjusting the focus of the camera **4** (e.g., shorten the minimum focus distance) when the mirror is moved into the camera's field-of-view. As the panel holding the mirror **22** and lens **23** is slid towards the camera **4,** the mirror **22** is repositioned in order to redirect the camera's and/or illuminator's optical path.

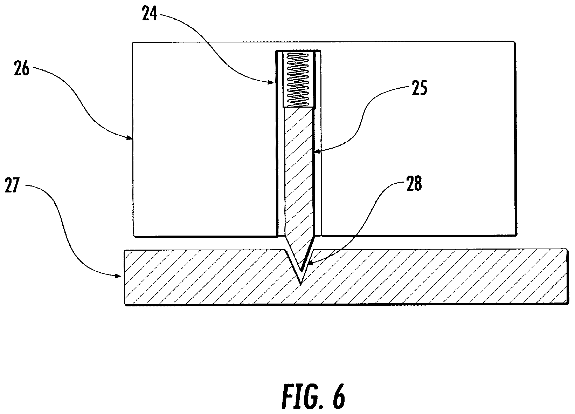

The motion of reconfigurable sled's movable parts may be limited by locking mechanisms. In this way, the sled may be moved into a first configuration (i.e., normal mode) or second configuration (i.e., scanning mode) and held there until a user changes the configuration. A possible embodiment of a locking mechanism is shown in Figure 6. Here a spring-loaded **24** locking element **25** (e.g., pin, ball, etc.) may be configured in a moving part **26** in order to lock the moving part **26** to a fixed part **27.** As the moving part **26** is moved into place, its locking element **25** is received by a mating locking feature **28** (e.g., detent) in the fixed part **27.** It should be noted that the term "locking", as it is used here, implies holding the moving parts in place so that movement out of place is made more difficult but not impossible. In other words, the motion of the locked parts due to typical mobile device use is limited, but a directed effort to move the locked parts is possible without strain. It should also be noted that the moving and fixed parts described might be reversed without any loss of locking functionality.

The mobile device may be configured to run software (i.e., applications) to perform tasks related to the reconfigurable sled's configuration. Indicia reading, for example, is one (but not the only) possible task that may be enabled by the reconfigurable sled. To facilitate this, visible markings, are applied to the mirror (e.g., ink print, laser marking, etc.). The mobile device may acquire images and process them in order to detect the presence and/or location of these markings in the images. The presence of the markings could indicate that the mirror is in the optical path of the mobile device camera. The location of the markings could indicate that the mirror is installed properly.

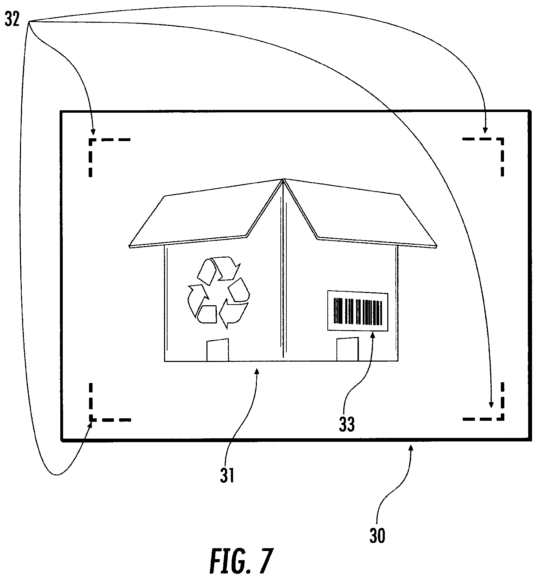

An exemplary image acquired by a mobile device with a mirror **22** in the camera's optical path is illustrated in Figure 7. The exemplary image **30** is of a package **31** with a barcode **33.** Here, the presence of the visible markings **32** could indicate (e.g., to an application running on the mobile device) that this image **30** was taken with the mirror **22** in the camera's optical path. In response, the mobile device may be configured to start/stop an application/process or change some hardware setting in order to facilitate a function (e.g., indicia reading). For example, an indicia-reading application could be launched to detect, scan, and decode at least one barcode **33** in the image **30.** In another exemplary embodiment, the markings could trigger the activation of the camera's illuminator. In another exemplary embodiment, the markings could cause the acquired images to be processed (e.g., rotated) to accommodate the mirror **22.** In still another exemplary embodiment, the markings could trigger an adjustment of algorithms (e.g., autofocus algorithms) controlling the focus of the lens on the mobile device (e.g., to make indicia reading faster).

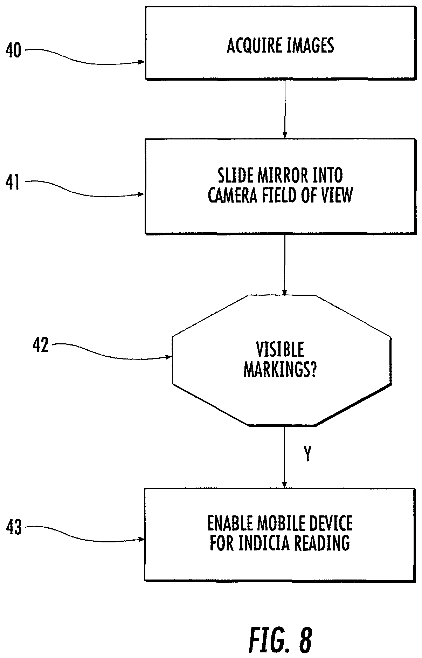

A flowchart of an exemplary method to enable the mobile device mounted in a reconfigurable sled for indicia reading is shown in Figure 8. In this method, images are acquired by the mobile device's imaging subsystem **40.** A mirror with visible markings is moved into the camera's field-of-view to change the imaging direction of the camera **41.** If the visible markings are detected and properly located in the acquired images **42,** then the mobile device is enabled for indicia reading **43.** If the visible markings are not detected then no action may be taken. Alternatively, if the visible markings are detected but not properly located, then an error message may be generated to alert a user and/or prompt the user to adjust the reconfigurable sled in order to configure the mirror properly.

The mobile device, reconfigurable sled, and indicia reading application running on the mobile device may work together to form an indicia reading system. There are multiple possible embodiments for this system. For example, while the present invention is typically a passive device, having communication using visible markings, some other possible embodiments could include an active sled.

In an active sled, an electrical connection and/or communication could exist between the sled and the mobile device. In addition, an active sled might have an energy source (e.g., battery) to power some additional features. Such additional features could include, but are not limited to, projecting an aiming pattern onto a target for alignment or moving the mirror via a motion control subsystem. The aiming subsystem could include an aimer light source for generating light. In some embodiments, this light source could be the illuminator **5** of the mobile device, while in other embodiments this light source could be separate from the mobile device and integrate with the sled (e.g., light emitting diode, laser diode, etc.). This aimer light source could be powered by the mobile device's battery or by a battery external to the mobile device. For embodiments using the illuminator **5,** a filter may be used to change the illuminator's color to provide some advantage in aiming (e.g., to make the aimer light source light stand out from the background)

The aimer subsystem could also include an aimer aperture covering the aimer light source to shape the light into an aiming pattern (e.g., line, cross hair, box, etc.). Suitable aiming patterns could provide information corresponding to the orientation and spatial extend of the camera's field-of-view so that when projected onto a target help a user align the mobile device. An aimer lens could be included to project/focus the light from the aimer aperture onto the target.

## Claims

1. A reconfigurable sled (10) for a mobile device (1) with a camera (4), the sled comprising:
a frame (11) for holding the mobile device (1), the frame (11) configured with guides running along two sides; and
a cover (12) comprising a plurality of hinged panels (14,15,17,18) engaged with the guides so that the panels may be slid along the guides and folded into different configurations, (20,21) wherein
at least one of the hinged panels (14,15,17,18) is attached to the frame (11) at one end, **characterised in that** in a first configuration (20) the hinged panels (14,15,17,18) lie flat over the mobile device's back surface (6) and permit the camera (4) an unobstructed view, and
in a second configuration (21) two of the hinged panels (14, 15, 17) are folded to form a peak over the mobile device's back surface (6) and redirect the camera's field-of-view using a reflective element (22) affixed to one of the folded hinged panels (14, 17).

2. The reconfigurable sled for a mobile device with a camera according to claim 1, wherein the camera comprises an illuminator and light from the illuminator is redirected by the reflective element in the second configuration.

3. The reconfigurable sled for a mobile device with a camera according to claim 1, wherein the reflective element comprises a mirror with visible markings for indicating that the mirror is in the camera's field-of-view.

4. The reconfigurable sled for a mobile device with a camera according to claim 3, wherein an application running on the mobile device senses the visible markings and configures the mobile device for indicia reading.

5. The reconfigurable sled for a mobile device with a camera according to claim 1, wherein the hinged panels comprise:
a window panel having an aperture for the camera to image through, the window panel hingedly attached to the frame along the window panel's top edge;
a mirror panel configured with a reflective element for folding the camera's imaging direction, the mirror panel hingedly attached to the window panel's bottom edge; and
a slider panel for repositioning the window panel and the mirror panel, the slider panel hingedly attached to the mirror panel's bottom edge and engaged on the slider panel's sides by the frame's guides so that (i) the slider panel is free to slide within the guides and (ii) the slider panel holds the mobile device in the frame.

6. The reconfigurable sled for a mobile device with a camera according to claim 5, wherein mirror panel comprises a lens to reduce the minimum focus distance of the camera.

7. The reconfigurable sled for a mobile device with a camera according to claim 5, wherein the second configuration comprises the window panel folded 90 degrees with respect to the mobile device's back surface and the mirror panel is folded 45 degrees with respect to the back surface so that camera's field-of-view is redirected by the reflective element 90 degrees through the window panel aperture.

8. The reconfigurable sled for a mobile device with a camera according to claim 5, wherein the slider panel and guides are configured with a locking mechanism to lock the cover into either the first configuration or the second configuration.

9. The reconfigurable sled for a mobile device with a camera according to claim 5, wherein the cover may be moved into the first configuration or the second configuration by pressing a button located on the sled.

10. The reconfigurable sled for a mobile device with a camera according to claim 5, wherein the window panel comprises a transparent window covering the aperture.

## Patentansprüche

1. Rekonfigurierbarer Schlitten (10) für eine mobile Vorrichtung (1) mit Kamera (4), wobei der Schlitten umfasst:
einen Rahmen (11) zum Halten der mobilen Vorrichtung (1), wobei der Rahmen (11) mit an zwei Seiten entlang verlaufenden Führungen ausgestaltet ist; und
eine Abdeckung (12), die mehrere um Scharniere drehbare Platten (14, 15, 17, 18) umfasst, die mit den Führungen in Eingriff sind, so dass die Platten entlang den Führungen verschoben und zu verschiedenen Anordnungen (20, 21) umgeklappt werden können, wobei wenigstens eine der um Scharniere drehbaren Platten (14, 15, 17, 18) an einem Ende am Rahmen (11) befestigt ist,
**dadurch gekennzeichnet, dass**
in einer ersten Anordnung (20) die um Scharniere drehbaren Platten (14, 15, 17, 18) flach auf der rückseitigen Oberfläche (6) der mobilen Vorrichtung aufliegen und ein ungehindertes Sichtfeld für die Kamera (4) ermöglichen, und
in einer zweiten Anordnung (21) zwei der um Scharniere drehbaren Platten (14, 15, 17) so umgeklappt sind, dass sie eine Spitze über der rückseitigen Oberfläche (6) der mobilen Vorrichtung bilden und das Sichtfeld der Kamera mittels eines reflektierenden Elements (22), das an einer der umgeklappten, um Scharniere drehbaren Platten (14, 17) angebracht ist, umgelenkt wird.

2. Rekonfigurierbarer Schlitten für eine mobile Vorrichtung mit Kamera gemäß Anspruch 1, wobei die Kamera eine Beleuchtungsvorrichtung umfasst und Licht von der Beleuchtungsvorrichtung durch das reflektierende Element in der zweiten Anordnung umgelenkt wird.

3. Rekonfigurierbarer Schlitten für eine mobile Vorrichtung mit Kamera gemäß Anspruch 1, wobei das reflektierende Element einen Spiegel mit sichtbaren Markierungen umfasst, um anzuzeigen, dass sich der Spiegel innerhalb des Sichtfeldes der Kamera befindet.

4. Rekonfigurierbarer Schlitten für eine mobile Vorrichtung mit Kamera gemäß Anspruch 3, wobei eine auf der mobilen Vorrichtung laufende Anwendung die sichtbaren Markierungen erkennt und die mobile Vorrichtung für das Lesen von Kennzeichnungen konfiguriert.

5. Rekonfigurierbarer Schlitten für eine mobile Vorrichtung mit Kamera gemäß Anspruch 1, wobei die um Scharniere drehbaren Platten umfassen:
eine Fensterplatte mit einer Öffnung, durch die die Kamera Bilder aufnehmen kann, wobei die Fensterplatte entlang der Oberkante der Fensterplatte um Scharniere drehbar am Rahmen angebracht ist;
eine Spiegelplatte, die mit einem reflektierenden Element ausgestaltet ist, um die Bildaufnahmerichtung der Kamera zu ändern, wobei die Spiegelplatte um Scharniere drehbar an der Unterkante der Fensterplatte angebracht ist; und
eine Gleitplatte zum Neupositionieren der Fensterplatte und der Spiegelplatte, wobei die Gleitplatte um Scharniere drehbar an der Unterkante der Spiegelplatte angebracht ist und an den Seiten der Gleitplatte mit den Führungen des Rahmens in Eingriff ist, so dass (i) die Gleitplatte frei innerhalb der Führungen verschiebbar ist und (ii) die Gleitplatte die mobile Vorrichtung im Rahmen festhält.

6. Rekonfigurierbarer Schlitten für eine mobile Vorrichtung mit Kamera gemäß Anspruch 5, wobei die Spiegelplatte eine Linse umfasst, um die Mindestbrennweite der Kamera zu reduzieren.

7. Rekonfigurierbarer Schlitten für eine mobile Vorrichtung mit Kamera gemäß Anspruch 5, wobei die zweite Anordnung die Fensterplatte um 90 Grad bezogen auf die rückseitige Oberfläche der mobilen Vorrichtung umgeklappt umfasst und die Spiegelplatte im 45-Grad-Winkel zur rückseitigen Oberfläche umgeklappt ist, so dass das Sichtfeld der Kamera durch das reflektierende Element um 90 Grad durch die Öffnung der Fensterplatte umgelenkt wird.

8. Rekonfigurierbarer Schlitten für eine mobile Vorrichtung mit Kamera gemäß Anspruch 5, wobei die Gleitplatte und die Führungen mit einem Arretiermechanismus ausgestaltet sind, um die Abdeckung entweder in der ersten Anordnung oder in der zweiten Anordnung zu arretieren.

9. Rekonfigurierbarer Schlitten für eine mobile Vorrichtung mit Kamera gemäß Anspruch 5, wobei die Abdeckung in die erste Anordnung oder in die zweite Anordnung bewegt werden kann, indem ein Knopf am Schlitten gedrückt wird.

10. Rekonfigurierbarer Schlitten für eine mobile Vorrichtung mit Kamera gemäß Anspruch 5, wobei die Fensterplatte ein durchsichtiges Fenster umfasst, das die Öffnung abdeckt.

## Revendications

1. Boîtier de lecture reconfigurable (10) pour un dispositif mobile (1) avec une caméra (4), le boîtier de lecture comprenant :
un cadre (11) destiné à maintenir le dispositif mobile (1), le cadre (11) configuré avec des guides courant le long de deux côtés ; et
un capot (12) comprenant une pluralité de panneaux à charnières (14, 15, 17, 18) en prise avec les guides de telle sorte que les panneaux peuvent être glissés le long des guides et pliés dans différentes configurations (20, 21),
au moins un des panneaux à charnières (14, 15, 17, 18) étant attaché au cadre (11) à une extrémité, **caractérisé en ce que**
dans une première configuration (20), les panneaux à charnières (14, 15, 17, 18) sont à plat sur la surface arrière (6) du dispositif mobile et offrent à la caméra (4) une vue dégagée, et
dans une deuxième configuration (21), deux des panneaux à charnières (14, 15, 17) sont pliés pour former un pic par-dessus la surface arrière (6) du dispositif mobile et rediriger le champ de vision de la caméra en utilisant un élément réfléchissant (22) fixé à un des panneaux à charnières pliés (14, 17).

2. Boîtier de lecture reconfigurable pour un dispositif mobile avec une caméra selon la revendication 1, la caméra comprenant un dispositif d'éclairage et la lumière provenant du dispositif d'éclairage étant redirigée par l'élément réfléchissant dans la deuxième configuration.

3. Boîtier de lecture reconfigurable pour un dispositif mobile avec une caméra selon la revendication 1, l'élément réfléchissant comprenant un miroir avec des marques visibles destinées à indiquer que le miroir est dans le champ de vision de la caméra.

4. Boîtier de lecture reconfigurable pour un dispositif mobile avec une caméra selon la revendication 3, une application tournant sur le dispositif mobile détectant les marques visibles et configurant le dispositif mobile pour la lecture d'indices.

5. Boîtier de lecture reconfigurable pour un dispositif mobile avec une caméra selon la revendication 1, les panneaux à charnières comprenant :
un panneau à fenêtre ayant une ouverture pour que la caméra y forme des images, le panneau à fenêtre attaché par des charnières au cadre le long du bord supérieur du panneau à fenêtre ;
un panneau faisant miroir configuré avec un élément réfléchissant pour détourner la direction d'imagerie de la caméra, le panneau faisant miroir attaché par des charnières au bord inférieur du panneau à fenêtre ; et
un panneau faisant glissière pour repositionner le panneau à fenêtre et le panneau faisant miroir, le panneau faisant glissière attaché au bord inférieur du panneau faisant miroir et pris sur les côtés du panneau faisant glissière par les guides du cadre de telle sorte que (i) le panneau faisant glissière est libre de glisser à l'intérieur des guides et (ii) le panneau faisant glissière maintient le dispositif mobile dans le cadre.

6. Boîtier de lecture reconfigurable pour un dispositif mobile avec une caméra selon la revendication 5, le panneau faisant miroir comprenant une lentille pour réduire la distance de focalisation minimale de la caméra.

7. Boîtier de lecture reconfigurable pour un dispositif mobile avec une caméra selon la revendication 5, la deuxième configuration comprenant le panneau à fenêtre plié à 90 degrés par rapport à la surface arrière du dispositif mobile et le panneau faisant miroir étant plié à 45 degrés par rapport à la surface arrière de telle sorte que le champ de vision de la caméra est redirigé par l'élément réfléchissant à 90 degrés par l'ouverture du panneau à fenêtre.

8. Boîtier de lecture reconfigurable pour un dispositif mobile avec une caméra selon la revendication 5, le panneau faisant glissière et les guides étant configurés avec un mécanisme de verrouillage pour verrouiller le capot dans la première configuration ou la deuxième configuration.

9. Boîtier de lecture reconfigurable pour un dispositif mobile avec une caméra selon la revendication 5, le capot pouvant être déplacé dans la première configuration ou la deuxième configuration en appuyant sur un bouton situé sur le boîtier de lecture.

10. Boîtier de lecture reconfigurable pour un dispositif mobile avec une caméra selon la revendication 5, le panneau à fenêtre comprenant une fenêtre transparente recouvrant l'ouverture.
